# EUROPEAN PATENT SPECIFICATION

(11) **EP 4 466 509 B1**
(45) Date of publication and mention of the grant of the patent: **14.01.2026**
(21) Application number: 23705087.7
(22) Date of filing: 17.01.2023
(51) Int. Cl.: F28F 25/08, B01J 19/32, D03D 13/00

(54) **RETICULAR PANEL FOR A COOLING TOWER**
NETZFÖRMIGE PLATTE FÜR EINEN KÜHLTURM
PANNEAU RÉTICULAIRE POUR TOUR DE REFROIDISSEMENT

(30) Priority: 21.01.2022 IT 202200000983
(43) Date of publication of application: 27.11.2024
(73) Proprietor: Spig S.P.A., 28040 Paruzzaro (NO) (IT)
(72) Inventor: BRUGNONI, Marco, 28040 Paruzzaro (NO) (IT); BERTOCCHI, Luca, 28040 Paruzzaro (NO) (IT)
(74) Representative: Riccardi, Sergio
(86) International application number: PCT/IT2023/050011
(87) International publication number: WO 2023/139621

(56) References cited:
- EP-A1- 0 807 462
- EP-A2- 0 745 825
- WO-A1-2020/106919
- WO-A1-99/06784
- DE-A1- 102005 045 151
- DE-A1- 102005 051 882
- DE-U1- 20 208 865
- DE-U1- 20 311 945
- GB-A- 776 794
- US-A- 2 940 168
- US-A- 4 691 744
- US-B1- 6 206 350
- US-B2- 7 264 645
- ANONYMOUS: "Ginning Knitted Wire Mesh - Stainless Steel and Copper", 7 August 2016 (2016-08-07), XP055949541, Retrieved from the Internet <URL:https://web.archive.org/web/20160807023740/http://www.knitted-mesh.com:80/products/ginning-knitted-wire.html> [retrieved on 20220805]

## Description

The present invention relates to a reticular panel for a cooling tower of the kind recited in the preamble of the first claim.

More particularly, the present invention relates to a reticular panel, generally known as splash fill, suitable to be so coupled or staked with other panels, as to make a thermal exchange pack for a cooling tower.

A similar panel is described in the patent application WO 2020/106919A1.

As it is well known, a cooling tower or evaporation tower, substantially is a big gas-liquid heat exchanger, generally having the form of a cylindrical or truncated cone parallelepiped, wherein the liquid phase yields energy to the gaseous phase, thus reducing its own temperature.

Among the most diffused types, generally there are the forced circulation tower and the natural induced flow tower.

The forced circulation tower, which is the most diffused one for water cooling, substantially consists of a containment structure made of cement, metal or plastics, having at its base openings for circulation of atmospheric air induced by a fan; a water distribution system consisting of spraying nozzles, and a plastic filling member and a cooled water tank.

Conversely, the induced flow cooling towers are exploiting the water evaporation and the density difference of the mixture of air and steam. Therefore they may avoid to use the circulation fan, which clearly makes an impact on the global costs and the energy consumption.

These towers without fan are known as natural flow, natural circulation or natural draft towers, and have a characteristic configuration with vertical section like a hyperboloid with a pitch and a stack.

In any case, the basic operational system of the cooling towers is as follows.

Water dispersed in the tower upper part, thus falling downwards is contacted by air induced to climb by the fan or by the density difference. The contact is as much deeper as wider is the surface of the water droplets contacted by air, namely the matter exchange surface. Therefore, these is a matter exchange from the water droplets, defining the dispersed phase, to the air defining the continuous phase, due to the humidification of air that is not saturated steam.

In view of evaporation matter exchange, water gives energy to air in a substantially air isothermal way, but with heat transfer, i.e. cooling of water. Therefore, water comes out from the exchange with a temperature at outlet lower than the inlet one.

The above described heat exchange is generally made by means of thermal exchange packs, as structured fillers, substantially comprising a plurality of superposed corrugated panels, configured to allow the drainage to the lower collection thank of the water droplets, and their thermal exchange with air flowing between the panels.

These panels may consist of solid or reticular sheets.

The solid sheets are usually named film fills, while the reticular sheets are named splash fills.

The solid sheets or film fills substantially are thermoformed sheets of polymeric materials, such as PVC, characterized by reduced thickness and weight.

The production of these sheets or panels is generally made through conventional thermoform ing installations, preferably under vacuum.

The reticular panels or splash fills are sheets structurally defined as an ordered reticular generally injection made panel.

The solid panels are generally more efficient; however, they may be used for cleaner waters with low contents of suspended solids.

The reticular panels are generally less efficient but they are more versatile, since they can be used even with less filtered waters having a higher concentration of suspended solids, i.e. dirtier waters.

The above described prior art has some important drawbacks.

More particularly, the prior art reticular panels, when assembled to make packs, may be clogged when used with waters having high contents of suspended solids.

Indeed in panels with diagonal fins, the presence of continuous contact sheets reduces the space for passage of these solids.

Therefore, the known reticular panels may globally have a very low efficiency when used with very dirty waters.

Moreover, the prior art reticular panels may have a very low thermal efficiency when composed with splash fills.

Moreover, the packs made with prior art reticular panels are generally packed in a vertical or diagonal arrangement, thus repairing long and difficult assembling times.

In conclusion, the prior art panels, when pack assembled, allow the liquid droplets to hit the cold water surface without any obstacle, thus causing noise that generally should be damped with additional elements.

In detail, the acoustic reduction in the prior art installations is obtained by installing above the water surface of cold water, nets made of PA6 or other materials. However, this solution is not strong and homogeneous, and may be easily crumbled with risk of clogging the installation.

In such a situation, the technical object of the present invention is to devise a reticular panel for a cooling tower capable of substantially removing at least some of the mentioned drawbacks.

In the frame of said technical object, it is an important object of the invention to attain a reticular panel which, when assembled with other panels to make a thermal exchange pack, be efficient with any kind of water, even and above all with dirty waters.

More particularly, an important object of the invention is to make a reticular panel, that when assembled with other similar panels, avoids clogging of the pack.

Another important object of the invention is to make a reticular panel having a high thermal efficiency.

Moreover, another object of the invention is to make a reticular panel that may be assembled easily and quickly.

In addition, another object of the invention is to make a reticular panel that, when assembled with other panels to make a thermal exchange pack, allows to reduce the possibility of impact between the water droplets and the free surface in the cold water tank, thus reducing the noise caused by the operation of the cooling tower.

The technical object and the specific objects are attained by a reticular panel for a cooling tower as recited in the annexed claim 1.

Preferred technical solutions are highlighted in the dependent claims.

The characteristics and advantages of the invention are hereinafter illustrated by the detailed description of preferred embodiments of the invention, with reference to the accompanying drawings, in which:

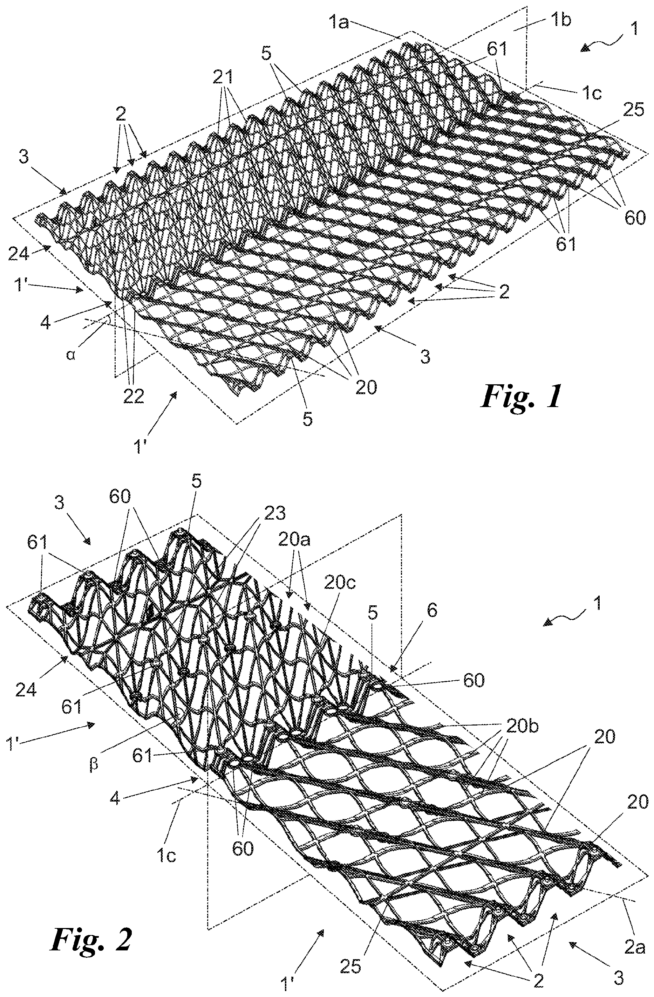

Fig. 1 is a prospective view of a complete reticular panel for cooling tower according to the invention;
Fig. 2 is a detailed view of part of a complete reticular panel fan cooling tower according to the invention;

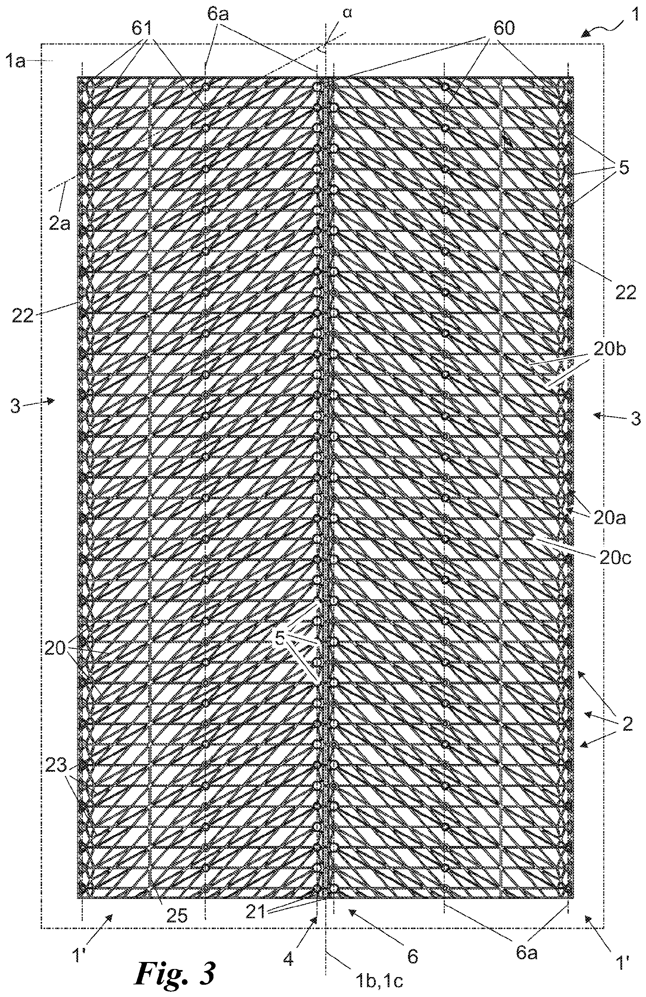

Fig. 3 is a top view of a reticular panel for cooling tower according to the invention;
Fig. 4a is a front view of a reticular panel for cooling tower according to the invention;
Fig. 4b is a side view of a reticular panel for cooling tower according to the invention;
Fig. 5a is a front view of a thermal exchange pack for cooling tower according to the invention; and
Fig 5b is a side view of a thermal exchange pack for cooling tower according to the invention.

In this document, measures, values, forms and geometrical references (such as verticalness and parallelism), when associated with such terms as "about" or other similar terms like "almost" or "substantially", should be understood except for measurement errors or inaccuracies due to production and/or manufacture, and above all for a slight deviation of the value, measure, form or geometrical reference associated therewith. For instance, these terms, when associated with a value, preferably mean a deviation not greater than 10% of the value.

Moreover, when used, terms such as "first", "second", "higher", "lower", "main" and "secondary" do not necessarily identify an order, a priority of relation or corresponding position, but may be merely used to distinguish different components more clearly from each other.

Unless where specified otherwise, as it will be apparent hereinafter, terms such as "treatment", "informatics", "determination", "calculation" and the like, refer to the action and/or process of a computer or similar device of electronic calculation manipulating and/or transforming data represented as physical ones, such as electronic magnitudes of an informatic system and/or memory, into other data likewise represented as physical quantities inside informatic systems, registers or other devices of storage, transmission or display of data.

The measurements and data reported in the present disclosure are to be considered, unless where otherwise stated, as carried out under the ICAO International Standard Atmosphere (ISO 2533 : 1975).

With reference now to the figures of the drawings, the reticular panel for a cooling tower of the invention is globally shown by reference numeral 1.

The reticular panel is substantially a pierced panel, not defining a solid surface like the known film fills.

In other words, the reticular panel is a panel usually known as "trickle" or "3D", or even "hybrid", capable of allowing a thermal exchange to form either a "splash" or a "film" of water. Therefore, the reticular panel conjugates preferably the typical functions of splash fill and film fill panels.

Thus, panel 1 defines a longitudinal plane 1a.

The longitudinal plane 1a substantially is the plane along which panel 1 is extended. However, this does not mean that panel 1 is rectilinear. On the contrary panel 1 is preferably not rectilinear as better specified hereinafter.

However, at least partially panel 1 is extended on the longitudinal plane 1a.

In detail, the panel 1 develops on the longitudinal plane in a wavy way.

Therefore, panel 1 is so extended as to make a plurality of fins 2.

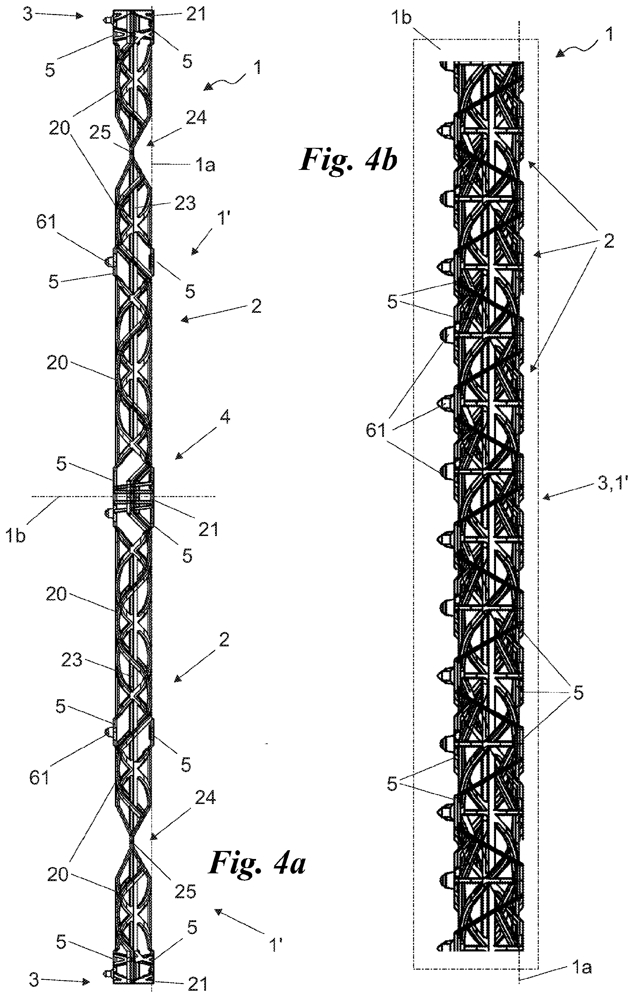

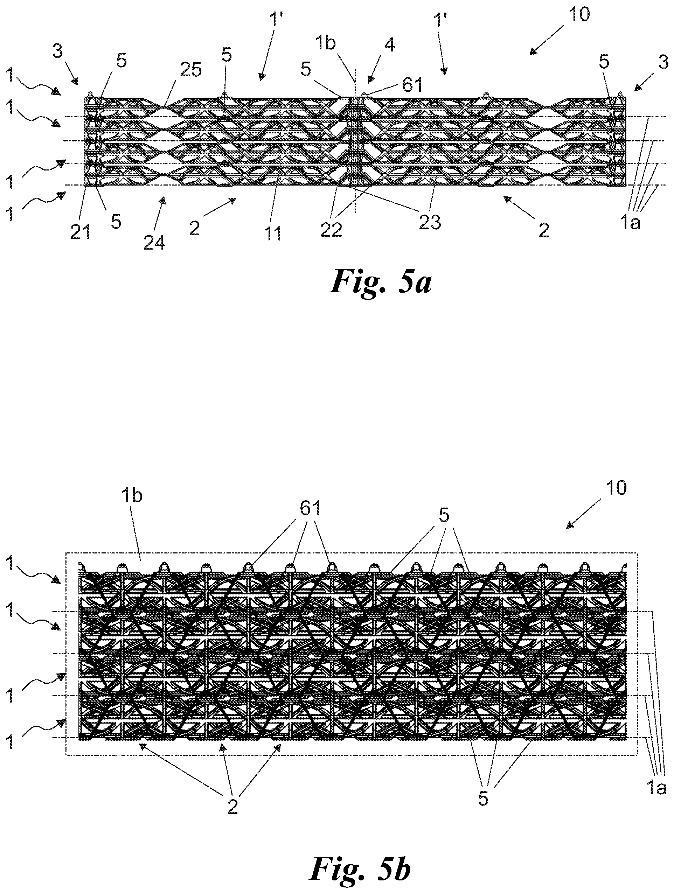

The fins 2 are substantially defined by wave fronts defined by panel 1 in the development. Of course, the wave fronts cannot be necessarily curved or sinusoidal. For instance, the fin profiles may be trapezoidal, as clearly shone in Figures 4a and 5b. The fins 2 are clearly connected by connection zones. Therefore, panel 1 comprises connection zones on the longitudinal plane 1a between fins 2. The connection zones may substantially correspond with the bases of fins 2 opposite to crests 20, that is the minimum points of wave fronts defining the fins 2.

Each fin 2 defines at least a crest 20.

Crest 20 is substantially the top of fin 2, namely the highest part of the wave front in respect of the longitudinal plane 1a. In other words, crest 20 is a top portion, which is more spaced from the longitudinal plane 1a compared to the remnant portion of fin 2, i.e. a maximum zone of the wave front.

On the contrary, panel 1 preferably defines minimum zones of the wave front between each fin 2 which are substantially laying on the longitudinal plane 1a.

Moreover, each fin 2 defines reticular walls 20a.

The reticular walls 20a are mutually separated by crests 20 and substantially converge thereto.

The reticular walls 20a may be altogether defined by segments developed along a zigzag path defined between crest 20 and longitudinal plane 1a.

Otherwise, the reticular walls 20a of each fin 2 may be defined on sides opposite to crest 20, by intersecting sinusoidal segments 20b.

More particularly, the sinusoidal segments or sinusoids may intersect at their inflection points 20c, which are the points of variation of the concavity. Therefore the sinusoidal segments 20b or sinusoids may be pairs mutually π/2 shifted on each wall of crest 20. Of course, with the term sinusoidal segments, one does not mean that the portions of reticular walls 20b are developed in a perfectly sinusoidal form, i.e. periodical and repeated along the extension of fin 2, which should not be necessarily regular or perfectly curved.

In any case, panel 1 defines also a sagittal plane 1b.

The sagittal plane 1b substantially is a plane perpendicular or normal to the longitudinal plane 1a. Therefore the sagittal plane 1b crosses and is incident with the longitudinal plane 1a.

More particularly, longitudinal plane 1a and sagittal plane 1b cross at a main axis 1c.

The main axis 1c preferably is substantially a central and/or barycentric and/or main inertial axis of panel 1. Therefore, the sagittal plane 1b preferably is substantially a plane dividing panel 1 in two symmetric parts. In other words, the sagittal plane 1b is preferably a midplane.

Panel 1, having a corrugated development, has recurring fins 2. More particularly, fins 2 are recurrent along the main axis 1c.

Moreover, fins 2 are preferably arranged in two rows 1'.

Rows 1' substantially are groups of fins 2 arranged on the two sides of plane 1 opposite to the sagittal plane 1b. In detail, rows 1' are preferably also symmetrical the sagittal plane 1b.

Therefore, fins 2 are extending along corresponding secondary axes 2a.

The secondary axes 2a are directions along which the fins 2 are developed. Preferably, panel 1 is regularly corrugated, so that the secondary axes 2a are mutually parallel. Moreover, the secondary axes 2a are transversal to the main axis 1c. Advantageously, each secondary axis 2a is inclined in respect of the main axis 1c with a first angle α.

The first angle α is worth about π/3 radians. With an angular value of about π/3 radians, one means in a notation with integers, that the first angle α is almost worth between π/2,5 and π/3,5.

Therefore, the first angle α may be comprised, in another notation, between 51° an 72°. More particularly, in the preferred embodiment, the first angle α is preferably equal to 61°.

The panel 1 also defines first edges 3 and second edges 4.

The edges 3, 4 substantially are zones of panel 1 delimiting the rows 1'.

More particularly, edges 3, 4 delimit the rows 1' along the main axis 1c.

Moreover, in detail the first edges 3 are end edges. This means that the first edges 3 are border edges globally delimiting panel 1. Therefore, each row 1' preferably includes a corresponding first edge 3'.

The first edges 3 generally extend parallel to the main axis 1c on the opposed sides of panel 1 in respect of the sagittal plane 1b.

The second edges 4 instead are preferably central to panel 1. Therefore, they extend parallel to the main axis 1c adjacent to the sagittal plane 1b on the opposed sides of panel 1 in respect of the sagittal plane 1b.

Even in this case, each row 1' preferably comprises a second edge 4. Thus substantially each row 1' of fins 2 is defined between a first edge 3 and a second edge 4, or each fin 2 is extended or developed along its own secondary axis 2a from the first edge 3 to the second edge 4 or vice versa.

Indeed, preferably each fin 2 defines a first end 21 and a second end 22.

Preferably, the first end 21 is arranged at the first edge 3 or coincides with it. Then the second end 22 is arranged at the second edge 4 or coincides with it.

Therefore, the crest 20 may be continuously developed from the first end 21 to the second end 22. Otherwise, fin 2 may also comprise a discontinuous crest 20, divided into several portions, e.g. two portions as clearly shown in figures 4a and 5a, and therefore fin 2 may define between the ends 21, 22 shrinkages 24. More particularly, preferably fin 2 defines a shrinkage 24 close to the first edge 3. The shrinkage 24 is obtained by a zone of fin 2 where it is concentrated in a segment defined by an intermediate plane comprised between crest 20 and longitudinal plane 1a.

Moreover, inside rows 1', fins 2 may define shrinkages 24 mutually aligned and connected through a bar 25. When present, bar 25 connects the shrinkages 24 of fins 2 and extends parallel to the main axis 1c, thus to edges 3, 4 too, preferably on the intermediate plane.

The bars 25 are structural elements that may allow for instance to increase resistance of panel 1 to combined bending and compressive stress or parallel to the main axis 1c, and may also increase resistance to bending of said panel 1.

More particularly, bars 25 are operative mainly under traction, to avoid that panel 1 is lengthened or flattened during the assembling operation.

Fins 2 may comprise further useful elements.

For instance, each fin 2 may comprise at least a blade 23.

When present, blade 23 may extend parallel to the secondary axis 2a. Moreover, it may be configured to increase the surface of thermal exchange of panel 1.

Indeed, blade 23 is substantially a segment extending at least on a wall of fin 2, so that this fin defines a surface greater than a conventional reticular panel.

In addition, advantageously blade 23 is developed at least on a reticular wall of fin 2, along each meeting point of the sinusoidal segments defining the opposite walls of each fin 2. In other words, each blade 23 is so developed as to define, with each sinusoidal segment, preferably a second angle β of about π/4 radians. Also in this case, the second angle β should be intended to be approximately comprised between π/3,5 e π/4,5. Therefore, the second angle β may be comprised, in another unit of measure, between 40° and 51°.

More particularly, in the preferred embodiment, the second angle β is preferably equal to be 45°.

Advantageously, panel 1 may comprise a plurality of protuberances 5.

If present, each protuberance 5 protrudes transversally to the longitudinal plane 1a, starting from crest 20, at least at a corresponding end 21, 22. In other words, each fin 2 comprises at least two protuberances 5, of which one protruding from crest 20 at the first end 21, and one protruding from crest 20 at the second end 22.

Moreover, panel 1 may comprise, alternatively or additionally, other protuberances 5. More particularly, also these protuberances 5 protrude transversally to the longitudinal plane 1a at least corresponding to a corresponding end 21, 22. However, these last protuberances 5 protrude from the longitudinal plane 1a.

This means that each fin 2 comprises at least two protuberances 5, of which one protrudes from the longitudinal plane 1a at the first end 21 and one protruding from the longitudinal plane 1a at the second end 22.

Therefore, protruding from the longitudinal plane 1a, these last protuberances 5 in few words protrude from the connection zones between fins 2, i.e. the minimum zones of the wave fronts defining the fins 2.

Thus, substantially the panel 1 may be provided generally with upper protuberances 5 arranged on the crest 20 and/or lower protuberances 5 arranged on the connections between fins 2, thus protruding from the longitudinal plane 1a.

Advantageously, protuberances 5 allow, when a panel 1 is coupled, either superposed or stacked, with other panels 1, to define contact zones between panels 1, so that adjacent panels 1 define a slot 11 between the crest 20 of a panel and the longitudinal plane 1a of the other panel or vice versa as shown in Fig. 4a.

Therefore, the slot 11 substantially is the space between stacked panels 1, including the protuberances 5 between the longitudinal plane 1a and the connection zones between fins 2 of a panel and the crest 20 of the other panel, respectively.

Advantageously, the protuberances 5 in any position are defined by a flat step. Therefore, they may be defined by a thickening or a rise of the panel 1.

Moreover, the flat step may be the support for another panel 1, as already stated. Therefore, the step may protrude from crest 20, thus being a thickening or a rise of the crest, or from the longitudinal plane 1a, thus corresponding to a thickening or rise of the connection zone between fins 2.

The panel 1 may also comprise other devices.

Advantageously, the pane 1 may comprise constraint means 6.

When present, the constraint means 6 are configured to allow the mutual connection of panels 1. More particularly, the constraint means 6 define such a connection between panels 1 as to remove the mutual degree of freedom between panels 1 in a plane parallel to the longitudinal plane, at the same time allowing the bearing of a panel 1 of another plane.

In this connection, the constraint means 6 comprise a plurality of holes 60 and pins 61. Clearly, holes 60 are configured to interact with pins 61 of another panel 1 and vice versa.

The holes 60 are configured to receive at least part of the pin 61.

Therefore, holes 60 are arranged at least between the fins 2 at the longitudinal plane 1a. This means that the holes 60 are preferably arranged in the connection zones between fins 2.

Moreover, the holes 60 are placed between the fins 2 on each row 1'.

However the pins 61 are preferably arranged at least in some of the protuberances 5 on each row 1'.

Holes 60 and pins 61 may be advantageously configured as follows.

For instance, the constraint means 6 may define, for each row 1', at least three constraint directions 6a.

The constraint directions 6a are directions along which the constraint means 6 are shared. Moreover, the constraint directions 6 are preferably parallel to the main axis 1c. The constraint directions 6a thus are arranged at the first edge 3, at the second edge 4 and between the edges 3, 4, respectively.

In this way, panels 1 may be mutually stacked with a good stability.

Moreover, each row 1', comprises a plurality of holes 60 aligned along the constraint directions 6a on the longitudinal plane 1a.

Therefore, each row 1' preferably comprises a plurality of said pins 61 aligned along the constraint directions 6a at the first edge 3, more particularly at the first end 21 and between edges 3, 4. Therefore, the rows 1' may comprise a plurality of holes 60 or pins 61 along the constraint direction 6a at the second edge 4, more particularly at the second end 22.

In detail, in the preferred embodiment, rows 1' define at the corresponding second edge 4 pins 61 and holes 60, respectively. In other words, if the second edge 4 of a row 1' comprises, at the second end 22, a plurality of holes 60, the other row 1' comprises, at the second ends 22, a plurality of pins 61.

Indeed, when the panels 1 are mutually stacked, it is preferable that the fins 2 of adjacent or superposed panels 1 are mutually crossed. To obtain such a configuration, a panel 1 is rotated, e.g. of 180 degrees, in respect of the other panel 1 and stacked thereon. Therefore, when rotated, pins 61 of the lower panel 1 of a second edge 4 may be inserted in the holes 60 of the upper panel 1 of a second edge 4.

As described, in the preferred embodiment, the constraint means 6 are distributed on panel 1 also between edges 3, 4. Thus, even the protuberances 5 may be distributed in different positions from ends 21, 22.

Preferably, each fin 2 comprises a protuberance 5 at each constraint means 6, or at each hole 60, and each pin 61, when they are positioned on the ends 21, 22, on the crest 20 between edges 3, 4, or between fins 2, for instance at the longitudinal plane 1a or on the connection zones between fins 2.

In any event, panels 1 according to the invention allow to make at least a pack 10 of thermal exchange.

The pack 10 comprises panels 1 mutually so stacked, that each longitudinal plane 1a is spaced from an adjacent longitudinal plane 1a by means of the fins 2. Of course, as explained hereinbefore, if the panels 1 comprise also protuberances 5, then slots 11 are also defined between longitudinal plane 1 and crests 20.

The fact of adopting panels 1 as hereinbefore illustrated, allows to attain an important configuration of pack 10.

Said pack is so configured that, when used, each longitudinal plane 1a may be positioned parallel to the bottom of a water collection basin of a cooling tower. Such a configuration is particularly efficient to reduce the noise of basin dripping.

This means that the panels 1 of pack 10 in a cooling tower may be arranged parallel to ground, or with the longitudinal 1a parallel to the bottom of the collection basin, contrary to the known packs which are assembled and arranged in the cooling tower with their longitudinal planes normal to its bottom.

Therefore, the invention comprises a novel use of a thermal exchange pack 10 for a cooling tower above a water collection basin, wherein each longitudinal plane 1a of the panels 1 included in the pack 10 is parallel to the basin bottom.

Of course, each longitudinal plane 1a might also be positioned perpendicular to the basin bottom. The last configuration is particularly efficient to increase the thermal exchange between packs 10.

Moreover, as already stated, in the pack 10 according to the invention, the panels 1 are so stacked, that the fins 2 of the superposed panels 1 are mutually crossed.

The operation of the above described panel 1 in structural terms is as follows.

Substantially, panel 1, when assembled with other panels 1 to make a pack 10, carries out functions like any other splash fill and film fill of prior art, in other words can convey dirty water coming out from the spraying nozzles of a cooling tower, up to the lower collection basin.

However, in view of their configuration, panels 1 allow to be assembled horizontally, that is with the longitudinal plane 1a parallel to the basin bottom. Therefore the panels 1 carry out a water path perpendicular to the longitudinal plane 1a, so as to reduce the dripping noise as water finds always an obstacle along the gravitation gradient, but the path is sufficiently open to avoid clogging of solids.

Panels 1 may also be assembled vertically, namely with the longitudinal plane 1a perpendicular to basin bottom, in order to increase efficiency in terms of thermal exchange.

Moreover, blades 23 allow to increase the thermal exchange that in splash fills is generally very limited.

Therefore, the invention comprises a novel process of assembling a pack 10. Preferably, the process comprises at least a positioning stage and a superposition stage.

In the positioning stage, a first panel is so positioned on a water collection basin, that the longitudinal plane 1a is parallel to the bottom, i.e. it is horizontal.

In the superposition stage, preferably a second panel 1 is positioned on the first panel 1 in such a way that the fins 2 of the second panel 1 are crossing the fins 2 of the underlying first panel 1.

Still more in detail, before the superposition stage, the second panel 1 may be rotated for 180° in respect of an axis perpendicular to the longitudinal plane 1a, and superposed on the first panel 1 in such a way that the holes 60 of the second panel 1, corresponding with the second edge 4 of a row 1', are inserted on pins 61 at the second edge 4 of a row 1' of the underlying first panel 1.

The reticular panel 1 for a cooling tower according to the invention attains important advantages.

Indeed the reticular panel 1, when assembled with other panels 1 to make a thermal exchange pack 10, is efficient with any kind of water, also and above all with dirty water. More particularly, the pack 10 made with panels 1 avoids clogging of said pack 10, because the presence of protuberances 5 allows to define slots 11 of passage between crests 20 and connection zones on the longitudinal plane 1a of adjacent panels 1. Moreover, the reticular panel 1 has a high thermal efficiency, in view of the presence of blades 23 which, in any case, do not hinder the passage of solids contained in dirty water.

Additionally, the reticular panel 1 may be coupled easily and quickly with other panels 1, also in view of the presence of the constraint means 6 and above all in view of the special configuration of holes 60 and pins 61 in the described positions.

In conclusion, the reticular panel 1, when assembled with other panels 1 to attain a thermal exchange pack 10, allows to reduce the possibility of impact between water droplets and the water surface in the basin of cold water, thus reducing the noise caused by the operation of the cooling tower, avoiding at the same time to use external networks.

The invention may be object of modifications within the frame of the inventive concept defined in the appended claims.

In such a frame all the details may be replaced by equivalent elements, and materials, forms and dimensions may be of any value and nature.

## Claims

1. Reticular panel (1) for a cooling tower, defining a longitudinal plane (1a) and a sagittal plane (1b) normal to said longitudinal plane (1a), intersecting at a main axis (1c) and extending corrugated on said longitudinal plane (1a), making repeated fins (2) running along said main axis (1c), arranged in two symmetrical rows (1') in respect of said sagittal plane (1b), extending along corresponding secondary axes (2a) transversal to said main axis (1c) and mutually parallel, each row comprising at least a top crest (20) more spaced from said longitudinal plane (1a) than the rest of said fin (2) and **characterized by** the fact that each of said fins (2) comprises at least a blade (23) extending parallel to said secondary axis (2a) and configured to increase the surface of thermal exchange of said panel (1).

2. Panel (1) according to claim 1, wherein each fin (2) defines at least two reticular walls (20a) on sides opposite to said crest (20), each wall being defined by pairs of sinusoidal segments (20b) intersecting at their inflexion points (20c), or mutually π/2 out of phase, and said blade (23) extends on at least a reticular wall of said fin (2) along each of said intersection points of said sinusoidal segments.

3. Panel (1) according to any preceding claim, wherein each secondary axis (2a) is slanting in respect of said main axis (1c) for a first angle (α) of approximately π/3 radians.

4. Panel (1) according to any preceding claim, further defining:
- first end edges (3) extending parallel to said main axis (1c) on opposite sides of said panel (1) in respect of said sagittal plane (1b);
- second central edges (4) extending parallel to said main axis (1c), adjacent to said sagittal plane (1b) on opposite planes of said panel (1) in respect of said sagittal plane (1b), wherein each of said fins (2) has at least a top crest (20) more spaced from said longitudinal plane (1a) when compared with the rest of said fin (2), and defines a first end (21) at said first edge (3) and a second end (22) at said second edge (4).

5. Panel (1) according to claim 3, wherein each of said fins (2) comprises a plurality of bosses (5), each boss protruding transversally to said longitudinal plane (1a) from said crest (20) and/or said longitudinal plane (1a) at least on a corresponding end (21, 22).

6. Panel (1) according to any claim 4-5, wherein each boss (5) is defined by a flat bearing step protruding from said crest (20) and/or said longitudinal plane (1a).

7. Panel (1) according to any preceding claim, comprising constraint means (6) configured to allow the mutual connection of adjacent panels (1), and comprising a plurality of holes (60) arranged at least between said fins (2) at said longitudinal plane (1a) on each row (1'), and a plurality of pins (61) arranged on at least some of said bosses (5) on each row (1').

8. Panel (1) according to any preceding claim, wherein said constraint means (6) define, for each row (1'), at least three constraint directions (6a) parallel to said main axis (1c), arranged respectively at the first edge (3), at the second edge (4) and between said edges (3, 4), and each row (1') comprises a plurality of said holes (60) aligned along said constraint directions (6a) at said longitudinal plane (1a), a plurality of pins (61) aligned along said constraint directions (6a) at said first edge (3) on said first end (21), and between said edges (3,4) and a plurality of said holes (60) or said pins (61) along said constraint direction (6a) at said second edge (4) on said second end (22).

9. Panel (1) according to any of claims 4-5 and 7-8, wherein each of said fins (2) comprises one boss (5) at each constraint means (6).

10. Pack (10) of thermal exchange for a cooling tower, comprising a plurality of said panels (1) according to any preceding claim, wherein said panels (1) are mutually so stacked in said pack (10), that each said longitudinal plane (1a) is spaced from a said longitudinal plane (1a) adjacent to said fins (2).

## Patentansprüche

1. Netzartige Platte (1) für einen Kühlturm, die eine Längsebene (1a) und eine senkrecht zu der genannten Längsebene (1a) verlaufende Sagittalebene (1b) beschreibt, die sich an einer Hauptachse (1c) schneiden und sich wellenförmig auf der genannten Längsebene (1a) erstrecken, wodurch entlang der genannten Hauptachse (1c) verlaufende, wiederholte Rippen (2) entstehen, die in zwei zur genannten Sagittalebene (1b) parallel verlaufenden symmetrischen Reihen (1') angeordnet sind, die sich entlang entsprechender Nebenachsen (2a) quer zu der genannten Hauptachse (1c) und zueinander parallel erstrecken, wobei jede Reihe mindestens einen oberen Scheitel (20) umfasst, der weiter von der genannten Längsebene (1a) entfernt ist als der Rest der genannten Rippe (2), und **dadurch gekennzeichnet, dass** jede der genannten Rippen (2) mindestens eine Lamelle (23) umfasst, die sich parallel zu der genannten Nebenachse (2a) erstreckt und darauf ausgelegt ist, die Wärmeaustauschfläche der genannten Platte (1) zu vergrößern.

2. Platte (1) nach Anspruch 1, wobei jede Rippe (2) mindestens zwei netzartige Wände (20a) auf den dem genannten Scheitel (20) gegenüberliegenden Seiten bildet und jede Wand durch Paare von sinusförmigen Segmenten (20b) gebildet wird, die sich an ihren Wendepunkten (20c) schneiden oder gegenseitig um Π/2 phasenverschoben sind, und wobei sich die genannte Lamelle (23) auf mindestens einer netzartigen Wand der genannten Rippe (2) entlang jedes der genannten Schnittpunkte der genannten sinusförmigen Segmente erstreckt.

3. Platte (1) nach einem der vorstehenden Ansprüche, wobei jede Nebenachse (2a) in Bezug auf die genannte Hauptachse (1c) um einen ersten Winkel (α) von ungefähr Π/3 Radiant geneigt ist.

4. Platte (1) nach einem der vorstehenden Ansprüche, ferner bestimmt durch:
- erste Endkanten (3), die sich parallel zu der genannten Hauptachse (1c) auf gegenüberliegenden Seiten der genannten Platte (1) in Bezug auf die genannte Sagittalebene (1b) erstrecken;
- zweite Mittelkanten (4), die sich parallel zu der genannten Hauptachse (1c) erstrecken, benachbart zu der genannten Sagittalebene (1b) auf gegenüberliegenden Ebenen der genannten Platte (1) in Bezug auf die genannte Sagittalebene (1b), wobei jede der genannten Rippen (2) mindestens einen oberen Scheitel (20) aufweist, der im Vergleich zum Rest der genannten Rippe (2) weiter von der genannten Längsebene (1a) beabstandet ist und ein erstes Ende (21) an der genannten ersten Kante (3) und ein zweites Ende (22) an der genannten zweiten Kante (4) bildet.

5. Platte (1) nach Anspruch 3, wobei jede der genannten Rippen (2) eine Vielzahl von Vorsprüngen (5) umfasst und jeder Vorsprung quer zu der genannten Längsebene (1a) aus dem genannten Scheitel (20) und/oder der genannten Längsebene (1a) zumindest an einem entsprechenden Ende (21, 22) hervorsteht.

6. Platte (1) nach einem der Ansprüche 4-5, wobei jeder Vorsprung (5) durch eine flache Auflagefläche gebildet wird, die von dem genannten Scheitel (20) und/oder der genannten Längsebene (1a) absteht.

7. Platte (1) nach einem der vorstehenden Ansprüche mit Befestigungsmitteln (6), die darauf ausgelegt sind, die gegenseitige Verbindung benachbarter Platten (1) zu ermöglichen, und mit einer Vielzahl von Löchern (60), die zumindest zwischen den genannten Rippen (2) an der genannten Längsebene (1a) in jeder Reihe (1') angeordnet sind, und einer Vielzahl von Stiften (61), die an mindestens einigen der genannten Vorsprünge (5) in jeder Reihe (1') angeordnet sind.

8. Platte (1) nach einem der vorstehenden Ansprüche, wobei die genannten Befestigungsmittel (6) für jede Reihe (1') mindestens drei Befestigungsrichtungen (6a) parallel zu der genannten Hauptachse (1c) festlegen, die jeweils an der ersten Kante (3), an der zweiten Kante (4) und zwischen den genannten Kanten (3, 4) angeordnet sind, und jede Reihe (1') eine Vielzahl der genannten Löcher (60), die entlang der genannten Befestigungsrichtungen (6a) an der genannten Längsebene (1a) ausgerichtet sind, eine Vielzahl von Stiften (61), die entlang der genannten Befestigungsrichtungen (6a) an der genannten ersten Kante (3) am genannten ersten Ende (21) und zwischen den genannten Kanten (3, 4) ausgerichtet sind, und eine Vielzahl der genannten Löcher (60) oder Stifte (61) entlang der genannten Befestigungsrichtung (6a) an der genannten zweiten Kante (4) an dem genannten zweiten Ende (22) umfasst.

9. Platte (1) nach einem der Ansprüche 4-5 und 7-8, wobei jede der genannten Rippen (2) einen Vorsprung (5) an jedem Befestigungsmittel (6) aufweist.

10. Plattenpaket (10) zur Wärmeübertragung für Kühltürme, das eine Vielzahl der genannten Platten (1) nach einem der vorstehenden Ansprüche umfasst, wobei die genannten Platten (1) in dem genannten Plattenpaket (10) so aneinander gereiht sind, dass jede genannte Längsebene (1a) von der genannten Längsebene (1a) beabstandet ist, die an die Rippen (2) angrenzt.

## Revendications

1. Panneau réticulaire (1) pour une tour de refroidissement, définissant un plan longitudinal (1a) et un plan sagittal (1b) perpendiculaire audit plan longitudinal (1a), en intersection avec un axe principal (1c) et s'étendant de manière ondulée sur ledit plan longitudinal (1a), en réalisant des ailettes répétées (2) s'étendant le long dudit axe principal (1c), disposées en deux rangées symétriques (1') par rapport audit plan sagittal (1b), s'étendant le long d'axes secondaires correspondants (2a) transversaux audit axe principal (1c) et mutuellement parallèles, chaque rangée comprenant au moins une crête supérieure (20) plus espacée dudit plan longitudinal (1a) que le reste des ladite ailette (2) et **caractérisé par le fait que** chacune desdites ailettes (2) comprend au moins une lame (23) s'étendant parallèlement audit axe secondaire (2a) et configurée pour augmenter la surface d'échange thermique dudit panneau (1).

2. Panneau (1) selon la revendication 1, dans lequel chaque ailette (2) définit au moins deux parois réticulaires (20a) sur les côtés opposés à ladite crête (20), chaque paroi étant définie par paires de segments sinusoïdaux (20b) se coupant en leurs points d'inflexion (20c), ou déphasés mutuellement de Π/2, et ladite lame (23) s'étend sur au moins une paroi réticulaire de ladite ailette (2) le long de chacun desdits points d'intersection desdits segments sinusoïdaux.

3. Panneau (1) selon l'une quelconque des revendications précédentes, dans lequel chaque axe secondaire (2a) est incliné par rapport audit axe principal (1c) d'un premier angle (α) d'environ Π/3 radians.

4. Panneau (1) selon l'une quelconque des revendications précédentes, définissant en outre :
- des premiers bords d'extrémité (3) s'étendant parallèlement audit axe principal (1c) sur les côtés opposés dudit panneau (1) par rapport audit plan sagittal (1b) ;
- des seconds bords centraux (4) s'étendant parallèlement audit axe principal (1c), adjacents au plan sagittal (1b) sur des plans opposés dudit panneau (1) par rapport audit plan sagittal (1b), dans lequel chacune desdites ailettes (2) comporte au moins une crête supérieure (20) plus espacée dudit plan longitudinal (1a) par rapport au reste de ladite ailette (2), et définit une première extrémité (21) au niveau dudit premier bord (3) et une deuxième extrémité (22) au niveau dudit deuxième bord (4).

5. Panneau (1) selon la revendication 3, dans lequel chacune desdites ailettes (2) comprend une pluralité de bossages (5), chaque bossage faisant saillie transversalement par rapport audit plan longitudinal (1a) à partir de ladite crête (20) et/ou dudit plan longitudinal (1a) au moins sur une extrémité correspondante (21, 22).

6. Panneau (1) selon l'une quelconque des revendications 4 à 5, dans lequel chaque bossage (5) est défini par un gradin d'appui plat faisant saillie à partir de ladite crête (20) et/ou dudit plan longitudinal (1a).

7. Panneau (1) selon l'une quelconque des revendications précédentes, comprenant des moyens de contrainte (6) configuré pour permettre la connexion mutuelle de panneaux adjacents (1), et comprenant une pluralité de trous (60) disposés au moins entre lesdites ailettes (2) au niveau dudit plan longitudinal (1a) sur chaque rangée (1'), et une pluralité de broches (61) disposées sur au moins certaines desdites bossages (5) sur chaque rangée (1').

8. Panneau (1) selon l'une quelconque des revendications précédentes, dans lequel ledit moyen de contrainte (6) définit, pour chaque rangée (1'), au moins trois directions de contrainte (6a) parallèles audit axe principal (1c), disposées respectivement au niveau du premier bord (3), au niveau du deuxième bord (4) et entre lesdits bords (3, 4), et chaque rangée (1') comprend une pluralité desdits trous (60) alignés le long desdites directions de contrainte (6a) au niveau dudit plan longitudinal (1a), une pluralité de broches (61) alignées le long desdites directions de contrainte (6a) au niveau dudit premier bord (3) sur ladite première extrémité (21), et entre lesdits bords (3, 4) et une pluralité desdits trous (60) ou lesdites broches (61) le long de ladite direction de contrainte (6a) au niveau dudit deuxième bord (4) sur ladite deuxième extrémité (22).

9. Panneau (1) selon l'une quelconque des revendications 4 à 5 et 7 à 8, dans lequel chacune desdites ailettes (2) comprend un bossage (5) au niveau de chaque moyen de contrainte (6).

10. Corps (10) d'échange thermique pour une tour de refroidissement, comprenant une pluralité desdits panneaux (1) selon l'une quelconque des revendications précédentes, dans lequel lesdits panneaux (1) sont empilés les uns sur les autres dans ledit corps (10) de telle sorte que chaque plan longitudinal (1a) soit espacé d'un dit plan longitudinal (1a) adjacent auxdites ailettes (2).
